# EUROPEAN PATENT APPLICATION

(11) **EP 4 566 955 A2**
(43) Date of publication of application: **11.06.2025**
(21) Application number: 24206872.4
(22) Date of filing: 16.10.2024
(51) Int. Cl.: B65B 25/14, B65B 35/40

(54) **A MACHINERY AND METHOD TO HANDLE A STACK OF FOLDED ITEMS**

(30) Priority: 17.10.2023 IN 202321070784
(71) Applicant: Dandekar, Sanjay Madhav, Pune 411052 (IN); Deshpande, Datta Hari, Pune 411052 (IN)
(72) Inventor: DANDEKAR, Sanjay Madhav, 411052 Pune (IN); DESHPANDE, Datta Hari, 411052 Pune (IN); SUTAR, Umesh Baban, 411024 Pune (IN)
(74) Representative: Dr. Gassner & Partner mbB

(57) **Abstract**

The present invention relates to a machinery (100) and method (200) to handle a stack (2) of folded items. The machinery (100) includes a transport platform (20), a first stacking area (24) and a designated stacking area (26) arranged on the transport platform (20), a delivery area (70) located adjacent to the transport platform (20) and a handling apparatus (60) arranged in between the transport platform (20) and the delivery area (70). The handling apparatus (60) includes a base (601), a plurality of articulated segments (61a, 61b, ...) arranged on the base (601) and a control unit (68) configured to manage the movement and operation of the handling apparatus (60). The handling apparatus (60) is adapted to pick up the stack (2) of folded items from the designated stacking area (26), transport and release the stack (2) of folded items into a receptacle (701) in the delivery area (70).

## Description

### Field of the invention

The present invention relates to a method and machinery for stacking and packaging folded items. More specifically, the present invention relates to a machinery and method to handle a stack of folded items.

### Background of the invention

In numerous industries, with a particular focus on the pharmaceutical sector, folded items serve a vital function as informative leaflets accompanying pharmaceutical items. These meticulously folded materials are instrumental in providing essential information about the pharmaceutical product, including usage instructions, potential side effects, dosage guidelines, and more. They play a crucial role in ensuring that patients and consumers are well-informed about the medication they are using, promoting safe and effective use.

Traditionally, these folded items were either placed loosely within the outer packaging of the pharmaceutical product or directly affixed to the container. The folding process is facilitated by specialized folding machines, allowing for precise and uniform folding to accommodate comprehensive information in a compact format. To ensure these folded information sheets remain securely in place, adhesive may be used to affix them to the product packaging.

Once folded and prepared, the semi-finished or finished products are organized into stacks for efficient packaging. They are typically placed into receptacles such as trays or boxes, streamlining the overall packaging process. However, despite the importance of these folded items and the advancements in packaging technology, there are limitations in the current methods of stacking and packaging them.

One significant challenge lies in the need for manual intervention during the stacking and packaging stages. This manual process is inherently time-consuming and demands a considerable amount of labor. It can slow down the overall production process and may introduce human errors, potentially affecting the accuracy and quality of the final packaged product.

While efforts have been made to introduce automation into the stacking and packaging of folded items, these automated solutions have limitations. The extent to which automation can be effectively implemented is constrained by various factors, including the level of automation within the packaging process and the specific dimensions and characteristics of the folded items. Achieving a high degree of automation that seamlessly integrates with the entire packaging process while accommodating diverse folded item variations remains a significant area for improvement and innovation within the industry.

One such solution is offered in US11130599 which aims to optimize the stacking and packaging of folded items, focusing on time efficiency and automation. The method involves creating a stack of folded items arranged upright in a row along a transport direction. This stack is then placed in a delivery area above a receptacle on support elements. The stack is released and pushed perpendicularly into the receptacle using a pushing device. However, while pushing the stack into the receptacle the folded items tend to shift and move away from the receptacle due to misalignment. This may lead to difficulties in achieving a well-organized and securely packed stack, affecting the overall effectiveness of the stacking and packaging process.

Therefore, there is a requirement for a machinery and method to handle a stack of folded items which overcomes few or all drawbacks of the existing technologies.

### Objects of the Invention

An object of the present invention is to provide a machinery and method to handle a stack of folded items machinery which can efficiently stack and package folded items, emphasizing time efficiency and a high level of automation.

One more object of the present invention is to provide a machinery and method to handle a stack of folded items machinery which can accurately stack the folded items without damaging the folded items during handling.

One more object of the present invention is to provide a machinery and method to handle a stack of folded items machinery which can facilitate the non-stop production of folded items from folding machines without facing issues like bottlenecking and over stacking.

### Summary of the Invention

According to the present invention, a machinery and method to handle a stack of folded items are provided. The machinery includes a transport platform, a first stacking area arranged on the transport platform, a designated stacking area arranged on the transport platform and adjacent to the first stacking area, a delivery area located adjacent to the transport platform, and a handling apparatus arranged in between the transport platform and the delivery area.

The first stacking area is adapted to receive a plurality of folded items to form a stack of folded items having a predefined number of folded items and the second stacking area is provided to receive the stack of folded items from the first stacking area.

Further, the transport platform includes a support arrangement adapted to support the folded items while receiving a plurality of folded items in the first stacking area. Upon forming the stack of folded items, the support arrangement moves in the transport direction along with a slider arrangement to transport the stack of folded items in the designated stacking area.

The slider arrangement is arranged at the transport platform and is provided to transport the stack of folded items to the designated stacking area upon receiving the predefined number of folded items in the first stacking area.

The designated stacking area includes a linear stopper and a transverse stopper to hold the stack of folded items in an upright position in the designated stacking area until the holding arrangement grips the stack.

The machinery includes a control module adapted to control the slider arrangement, the support arrangement, the linear stopper, and the transverse stopper and is interfaced with a control unit of the handling apparatus to synchronously control the movement of the handling apparatus.

The handling apparatus includes a base, a plurality of articulated segments arranged on the base and connected by joints to allow multi-directional movement, and the control unit configured to manage the movement and operation of the handling apparatus.

Further, at least one articulated segment of the plurality of the articulated segments has the holding arrangement arranged thereon, the holding arrangement is capable of gripping and releasing the stack of folded items from the designated stacking area to the delivery area.

The handling apparatus is adapted to pick up at least one stack of folded items from the designated stacking area, transport the stack of folded items to the delivery area, and release the stack of folded items into the receptacle in the delivery area.

The holding arrangement includes a first holding element and a second holding element. The first holding element and the second holding element are movable in a longitudinal direction facilitating the variable gap between the first holding element and the second holding element to receive the stack of folded therebetween.

The first holding element and the second holding element are movable towards each other for gripping the stack of folded items in the designated stacking area. The holding arrangement is adapted to grip the stack of folded items from the designated stacking area and release the stack of folded items into the receptacle in the delivery area.

Further, the holding arrangement includes a pusher movably arranged between the first holding element and the second holding element. the pusher is adapted to push the stack of folded items into a receptacle in the delivery area.

The pusher is arranged in such a way that the pusher makes contact with the top side of the stack of folded items, wherein, the pusher is adapted to push the stack of folded items from the top side to release the stack into the receptacle after the stack of folded items being released into the receptacle in the delivery area.

The pusher is adapted to push the stack of folded items after being released by the first holding element and the second holding element, wherein upon pushing the stack of folded items, the first holding element and the second holding element are moved away from each other to completely release the stack into the receptacle.

The control unit of the handling apparatus communicates with the control module to actuate the linear stopper and the transverse stopper to release the stack from the linear stopper and the transverse stopper once the holding arrangement grips the stack in between the first holding element and the second holding element.

Further, a method for handling a stack of folded items is provided. At first, a plurality of folded items are received in a first stacking area to form the stack of a predefined number of folded items. The stack of folded items is conveyed from the first stacking area to the designated stacking area. The designated stacking area is adapted to hold the stack of folded items before transporting them to the delivery area. Specifically, the designated stacking area includes the linear stopper and the transverse stopper to hold the stack of folded items in the upright position.

The handling apparatus having the holding arrangement grips the stack of folded items in the designated stacking area. The holding arrangement has the first holding element and the second holding element movable in a longitudinal direction towards each other to grip the stack of folded items therebetween. The handling apparatus picks up the stack of folded items from the designated stacking area for transporting it to the delivery area. The handling apparatus is adapted to move in multiple directions. The handling apparatus moves at least one articulated segment to transport the stack of the folded item in the delivery area.

Upon reaching the delivery area, the stack of folded items is released. The first holding element and the second holding element are moved away from each other in the longitudinal direction to release the stack of folded items.

The stack of folded items is released into the receptacle using a pusher and the first holding element and the second holding element of the holding arrangement. After releasing the stack, the first holding element and the second holding element are moved in the upward direction, and simultaneously the pusher is moved in a downward direction to release the stack of folded items into the receptacle.

### Brief description of drawings

The advantages and features of the present invention will be understood better with reference to the following detailed description and claims taken in conjunction with the accompanying drawings, wherein like elements are identified with like symbols, and in which:
Figure 1a-1b shows a top view and a side view of a machinery to handle a stack of folded items in accordance with the present invention;
Figure 2 shows a view of a stack that is being handled by a machinery to handle a stack of folded items in accordance with the present invention;
Figure 3 shows a schematic view of a machinery to handle a stack of folded items in accordance with the present invention;
Figure 4a-4b shows a side view and a top view of a machinery to handle a stack of folded items in accordance with the present invention;
Figure 5a-5b shows a side view and a top view of a machinery to handle a stack of folded items in another position in accordance with the present invention;
Figure 5c-5d shows a side view and a top view of a machinery to handle a stack of folded items in another position in accordance with the present invention;
Figure 6a-6b shows a side view and a top view of a machinery to handle a stack of folded items in another position in accordance with the present invention;
Figure 7 shows a side view of a machinery to handle a stack of folded items in another position in accordance with the present invention;
Figure 8a-8b shows a top view and a side view of a machinery to handle a stack of folded items in another position in accordance with the present invention;
Figure 9 shows a side view of a machinery to handle a stack of folded items in another position in accordance with the present invention;
Figure 10 shows a side view of a machinery to handle a stack of folded items in another position in accordance with the present invention;
Figure 11 shows a side view of a machinery to handle a stack of folded items in another position in accordance with the present invention;
Figure 12 shows a side view of a machinery to handle a stack of folded items in another position in accordance with the present invention;
Figure 13 shows a side view of a machinery to handle a stack of folded items in another position in accordance with the present invention;
Figure 14 shows a side view of a machinery to handle a stack of folded items in another position in accordance with the present invention, and

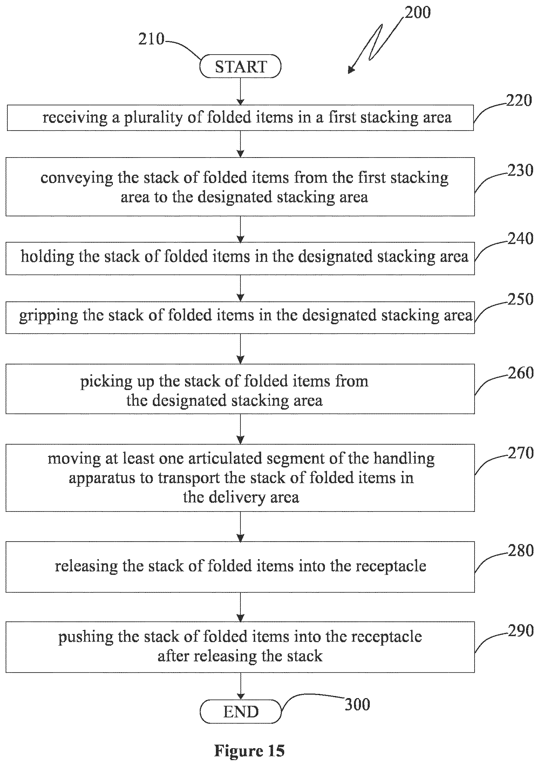

Figure 15 shows a flowchart of a method to handle a stack of folded items in accordance with the present invention.

### Detailed description of the invention

An embodiment of this invention, illustrating its features, will now be described in detail. The words "comprising," "having," "containing," and "including," and other forms thereof, are intended to be equivalent in meaning and be open-ended in that an item or items following any one of these words is not meant to be an exhaustive listing of such item or items, or meant to be limited to only the listed item or items.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item.

The disclosed embodiments are merely exemplary of the invention, which may be embodied in various forms.

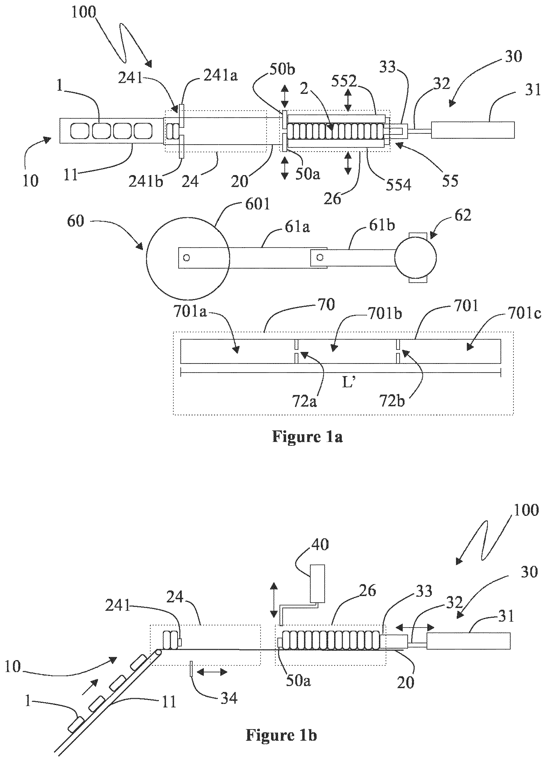

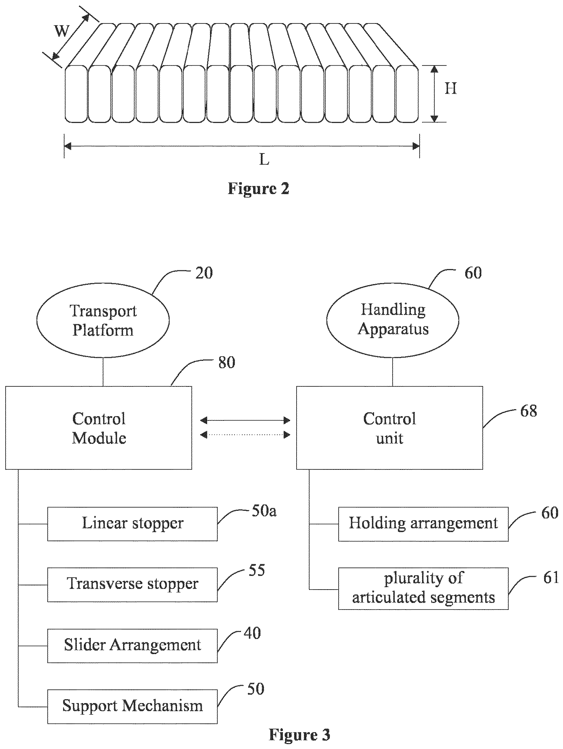

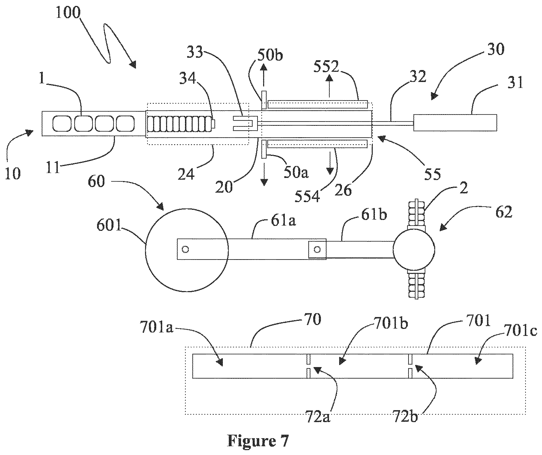

Referring now to figures 1-10, a machinery (100) to handle a stack (2) of folded items in accordance with the present invention is illustrated. Specifically, the machinery (100) is used for handling a stack (2) of folded items. The folded item (1) is a paper fold containing information in the form of write-ups, especially printed information or documentation that is folded and inserted into product packaging, such as pharmaceuticals, medical devices, and consumer goods. The machinery (100) includes a transport platform (20) having a first stacking area (24) and a second stacking area, a support mechanism (30) delivery area (70), slider arrangement (40), and a handling apparatus (60).

The transport platform (20) is provided to stack (2) the folded items received from a folding unit. In another embodiment, the folded items may be received from an inspection unit or a pressing unit or a sorting unit or any other unit that can be arranged before the stacking of the folded items.

Specifically, the transport platform (20) has the first stacking area (24) adapted to receive a plurality of folded items to form at least one stack (2) of the predefined number of folded items. The designated stacking area (26) is adapted to receive at least one stack (2) of folded items from the first stacking area (24) to hold it for a predefined period. Hereinafter "the stack (2) of folded items" is referred to as "the stack (2)".

The stack (2) has a length (L), width (W) and height (H). The length of the stack (2) is a linear dimension in the transport direction, the width of the stack (2) is a horizontal linear dimension transverse to the transport direction, and the height of the stack (2) is a vertical linear dimension transverse to the transport direction.

Initially, the feeding mechanism (10) sequentially introduces individual folded items (1) into the transport platform (20). Specifically, the feeding mechanism (10) includes a conveyor unit (11) transferring the folded item (1) to the first stacking area (24) of the transport platform (20).

The machinery (100) includes a temporary support (241) arranged in the first designated stacking area (24) to support the initial batch of folded items in the upright position. The temporary support (241) includes the first temporary support (241a) and the second temporary support (241b) arranged on the sidewall of the transport platform (20) and movable in a direction transverse to the transport direction.

The machinery (100) has a support mechanism (30) slidably arranged on the transport platform (20) to support the folded items in the first stacking area (24) for keeping the folded items in an upright position. The feeding mechanism (10) sequentially introduces individual folded items (1) into the first stacking area (24) of the transport platform (20).

The support mechanism (30) is arranged along the transport direction of the folded item (1) which is above the transport platform (20). The support mechanism (30) acts as a deadweight, holding the folded items (1) in an upright position during transportation on the transport platform (20). The support mechanism (30) includes an actuator (31), a rod (32) and a support structure (33). The rod (32) extends from the actuator (31) and has the support structure (33) arranged on the free end to support the folded item (1). The support structure (33) has a C-shaped structure.

The support structure (33) is movable in the transport direction to support the incoming folded items received from the feeding mechanism (10). The support mechanism (30) is adapted to move in the transport direction to support the folded items in the first stacking area (24), and upon forming the stack (2) of the predefined number of folded items, the support structure moves in the transport direction along with the stack (2) while transporting it from the first stacking area (24) to the designated stacking area (26).

Further, a support pad (34) is provided. The support pad (34) is arranged adjacent to the support structure (33) to take care of supporting the initial folded items of the next batch while the support mechanism (30) returns to support the folded items after the collection of the folded items by the handling apparatus (60). In the first cycle, the support structure (33) along with the support pad (34) provides support to the folded items. When the support structure (33) engages with the stack (2) of the folded items in the first stacking area (24), the support pad (34) detaches from the stack (2) and travels to the first stacking area (24) to support the second stack of the folded items. Specifically, the support pad (34) detaches from the support pad (33) to move downward, below the transport platform and travels linearly towards the first stacking area (24) to support the folded items. The support pad (34) is moved in an upward direction to support the folded items after detecting the predefined number of folded items being collected in the first stacking area (24). Simultaneously, the temporary support (241) is actuated to retract to the original position, once the support pad (34) is engaged with the stack of folded items.

Further, a slider arrangement (40) is arranged to push the stack (2) from the first stacking area (24) to the designated stacking area (26). When the folded items reach the first stacking area (24) and a sufficient stack (2) has been formed in the first stacking area (24), the slider arrangement (40) is activated to move the stack (2) towards the designated stacking area (26). The support mechanism (30) supports the folded items in the first stacking area (24) and moves along with the slider arrangement (40) to support the stack (2) until it reaches the designated stacking area (26).

The support pad (34) disengages from the stack (2) once the support structure (33) is engaged with the stack (2) in the first stacking area (24). The support pad (34) moves in a downward direction and travels along the transport path towards the feeding area (10) to support the next stack (2). Once the predefined number of folded items is received in the first stacking area (24), the temporary support (241) disengages from the stack (2) and the support pad (34) engages with the stack (2) to support the stack ()2 of folded items thereon.

The designated stacking area (26) has a linear stopper (50) and a transverse stopper (55). The linear stopper (50) is adapted to hold the stack (2) in the designated stacking area (26) in an upright position avoiding an expansion of the stack (2) or toppling of the folded items in the designated stacking area (26). The linear stopper (50) is adapted to travel in a direction perpendicular to the transport direction in the path of the transport direction to support the stack (2).

(50). In the present embodiment, the linear stopper (50) includes a first linear stopper (50a) and a second linear stopper (50b) adapted to travel horizontally in the transport path from a side support of the transport platform (20) to hold the stack (2) in the designated stacking area (26). The first linear stopper (50a) and the second linear stopper (50b) are configurable in an engaged position and a disengaged position. In the engaged position (shown in figure 1), the first linear stopper (50a) and the second linear stopper (50b) are in the path of the transport direction. In the disengaged position, the first linear stopper (50a) and the second linear stopper (50b) are retracted back into the sidewalls of the transport platform (20).

In another embodiment, the linear stopper (50) may be advanced vertically in the transport path from a bottom support of the transport platform (20).

The transverse stopper (55) includes a first transverse stopper (552) and a second transverse stopper (554) movably arranged in the designated stacking area (26) to hold the stack (2) from a transverse direction. The first transverse stopper (552) and the second transverse stopper (554) are elongated members extended along the length of the stack (2) and adapted to move in a direction perpendicular to the transport direction.

It may be obvious to a person skilled in the art to make the transverse stopper (55) adapted to configure variable lengths to support the stack (2) having different lengths.

The linear stopper (50) and the transverse stopper (55) are interfaced with a control module (80) to synchronize the operation of the linear stopper (50) and the transverse stopper (55) with the slider arrangement (40). The control module (80) is in connection with the slider arrangement (40), the linear stopper (50) and the transverse stopper (55) to facilitate the transportation of the stack (2) and holding the stack (2) in the designated stacking area (26).

The linear stopper (50) and the transverse stopper (55) are actuated by a pneumatic actuator, or a hydraulic actuator, or a motorized actuator or any other actuation mechanism to facilitate the movement of the linear stopper (50) and the transverse stopper (55).

Upon receiving the stack (2) in the designated stacking area (26) from the first stacking area (24), the control unit (68) actuates the linear stopper (50) and the transverse stopper (55) to hold the stack (2) in the upright position in the designated stacking area (26). The linear stopper (50) extends into the transport path to support the stack (2) from an end that is near the first stacking area (24). From the other end, the stack (2) is being supported by the support structure (33). The support structure (33) supports the stack (2) in the designated stacking area (26) until the handling apparatus (60) picks the stack (2) from the designated stacking area (26). Once the handling apparatus (26) picks the stack (2), the support structure (33) moves towards the first stacking area (24) to support the next stack (2). Until then the support pad (34) supports the next stack (2).

Upon actuating the linear stopper (50) and the transverse stopper (55) to hold the stack, the slider arrangement (40) is retrieved and moved to the original position for transporting or supporting the next stack (2) in the first stacking area (24).

Further, the delivery area (70) is provided adj acent to the transport platform (20). The delivery area (70) has at least one receptacle (701) which is adapted to receive the stack (2) (1) from the designated stacking area (26). Specifically, the handling apparatus (60) is arranged between the transport platform (20) and the delivery area (70) to transport the stack (2) from the designated stacking area (26) to the receptacle (701) of the delivery area (70).

The receptacle (701) is an elongated container configured to effectively organize and store a plurality of stacks of folded items. The receptacle is longitudinally extending and is having a length L' to accommodate multiple stacks (2) along its extended dimension. The receptacle (701) is divided into a plurality of portions (701a, 701b, 701c, ...) configured by a plurality of separators (72a, 72b, ...). In the present embodiment, the receptacle (701) has three portions, a first portion (701a), a second portion (701b), and a third portion (701c) separated by two separators, the first separator (72a), and a second separator (72b). Specifically, the plurality of separators (72a, 72b, ...) are arranged in the delivery area (70) configuring the plurality of portions (701a, 701b, 701c ...) and the separators (72a, 72b, ...) are adapted to adjust the length of each portion of the plurality of portions (701a, 701b, 701c ...) and are slidable along the length L'. The plurality of separators (72a, 72b, ...) are crucial as they create distinct sections within the receptacle (701), each designed to hold a separate stack (2).

The plurality of separators (72a, 72b, ...) are provided to support the stack in the portion of the receptacle (701) avoiding the toppling of the folded items ensuring that the folded items remain upright and orderly.

The handling apparatus (60) includes a base (601), a plurality of articulated segments (61a, 61b, ...) arranged on the base (601), a holding arrangement (62), and a control unit (68) configured to manage the movement and operation of the handling apparatus (60).

The base (601) is fixed to the ground or to the rigid structure to provide stability to the handling apparatus (60). The base (601) is adapted to receive the plurality of articulated segments (61a, 61b, ...) over there. The plurality of articulated segments (61a, 61b, ...) are movably arranged on the base (601) and connected to each other by joints to allow multi-directional movement.

In the present embodiment, the handling apparatus (60) includes two segments that are, a first segment (61a) movably arranged on the base (601) and a second segment (61b) movably arranged on the first segment (61a) and the second segment (61b) has a holding arrangement (62) mounted on a free end of the second segment (61b).

The first segment (61a) is movable in a rotational direction around the vertical axis of the base (601). Specifically, the first segment (61a) has a first end and a second end. The first end of the first segment (61a) is rotatably connected to the base (601) and adapted to rotate around the vertical axis of the base (601), and the second end is adapted to receive the second segment (61b) of the plurality of the articulated segments. The second segment (61b) is movably arranged on the second end of the first segment (61a) and is rotatable around a vertical axis of the second end of the first segment (61a).

Further, the second segment (61b) is having a free end adapted to mount the holding arrangement (62) thereon. The holding arrangement (62) is provided to hold the stack (2) therein while the segment of the plurality of the articulated segments transports the stack (2) from the designated stacking area (26) to the delivery area (70).

In another embodiment, the second segment (61b) is arranged on the first segment (61a) and is adapted to be movable in a vertical direction along the vertical axis of the second end of the first segment (61a).

In an alternative embodiment, the plurality of articulated segments (61a, 61b, ...) includes more than two segments and are connected to each other to allow multi-directional movement covering the larger area of movement for facilitating the transportation of the stack (2) from the designated stacking area (26) to the delivery area (70) which might be away from the designated stacking area (26). It is obvious for a person skilled in the art to configure the plurality of articulated segments (61a, 61b, ...) according to the distance and height between the designated stacking area (26) and the delivery area (70).

The holding arrangement (62) includes a first holding element (621) and a second holding element (622). The first holding element (621) and the second holding element (622) are movable in a longitudinal direction facilitating the variable gap between the first holding element (621) and the second holding element (622) to receive the stack (2) therebetween. The first holding element (621) and the second holding element (622) are movable towards each other for firmly gripping the stack (2) in the gap.

The first holding element (621) and the second holding element (622) are elongated in a downward direction having a length equal to or more than the height of the stack (2) to securely grip the stack (2) in the first holding element (621) and the second holding element (622).

Further, the holding arrangement (62) includes a pusher (625) that is arranged along with the first holding element (621) and the second holding element (622) and is adapted to push the stack (2) while releasing it into the receptacle (701) in the delivery area (70). The pusher (625) is an elongated member extending from the first holding element (621) towards the second holding element (622) and is independently movable in a vertical direction. the pusher (625) is movable in a direction perpendicular to the direction of the movement of the first holding element (621) and the second holding element (622).

In another embodiment, the pusher (625) includes compressible ends that are compressed in between the first holding element (621) and the second holding element (622) to facilitate the variable length of the pusher (625) for the stacks (2) having different lengths.

Further, the holding arrangement (62) is mounted on the segment (61b) of the plurality of articulated segments (61a, 61b, ...) and is adapted to be movable in a vertical direction. The vertical movement to the holding arrangement (62) is provided to pick up the stack (2) in an upward direction away from the designated stacking area (26) and adapted to move in a downward direction towards the receptacle (701) in the delivery area (70) for releasing the stack (2) into the receptacle (701).

In another embodiment, the vertical movement is provided to one of the segments of the plurality of articulated segments (61a, 61b, ...) to facilitate the movement of the holding arrangement (62) in the upward direction and the downward direction.

The plurality of articulated segments (61a, 61b, ...) and the holding arrangement (62) are interfaced with the control unit (68) of the handling apparatus (60) to manage the movement and operation of the plurality of articulated segments (61a, 61b, ...) and the holding arrangement (62) to facilitate the picking up of at least one stack (2) from the designated stacking area (26), transporting the stack (2) to the delivery area (70), and releasing the stack (2) into the receptacle (701) in the delivery area (70).

The control unit (68) of the handling apparatus (60) is interfaced with the control module (80) of the transport platform (20) to facilitate the synchronized working of the machinery (100) to handle a stack (2). The control module (80) and the control unit (68) are in connection with each other to communicate the position of the linear stopper (50) and the transverse stopper (55), the position of the holding arrangement (62) and the plurality of articulated segments (61a, 61b, ...) for synchronous operation in between the linear stopper (50), the transverse stopper (55), and the handling apparatus (60).

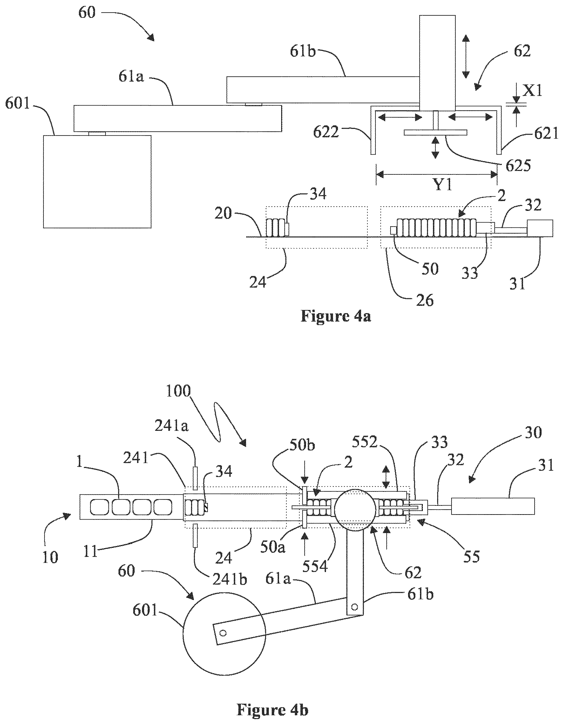

In an exemplary embodiment, the machinery (100) is adapted to handle the stack (2). The control module (80) controls the position of the linear stopper (50) and the transverse stopper (55) to hold the stack (2) in the designated stacking area (26) upon receiving the stack (2) from the first stacking area (24). Then, the control unit (68) of the handling apparatus (60) initiates the handling apparatus (60) to pick the stack (2) from the designated stacking area (26). First, the holding arrangement (62) is positioned (shown in figure 4a, and 4b) over the designated stacking area (26) by actuating the plurality of articulated segments (61a, 61b, ...). The first holding element (621) and the second holding element (622) are positioned in such a way that they have a distance of Y1 between the first holding element (621) and the second holding element (622). The distance Y1 is greater than the length (L) of the stack (2). Further, the distance between the segment (61b) and the holding arrangement is X1.

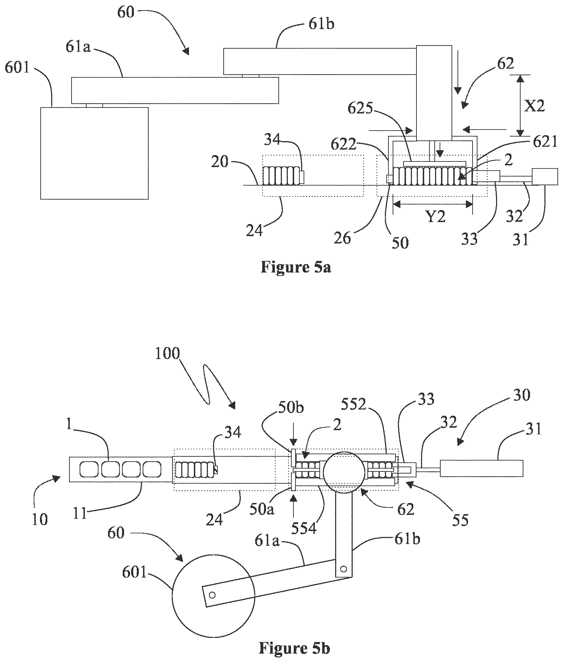

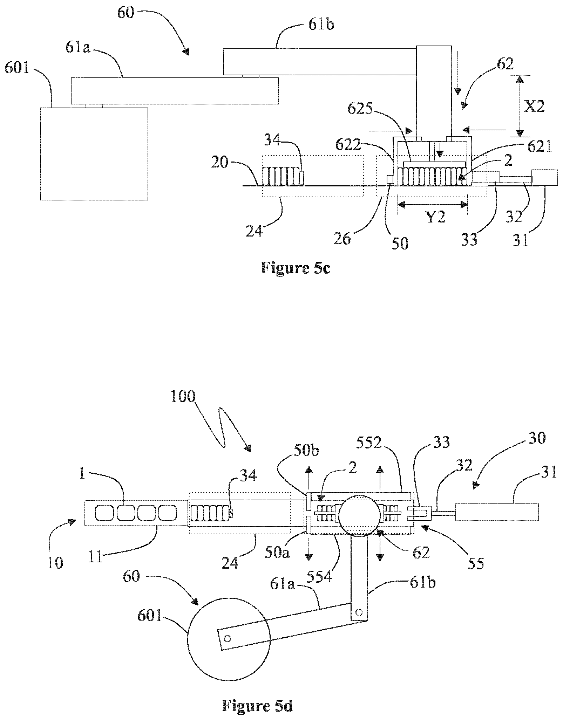

The first holding element (621) and the second holding element (622) of the holding arrangement (62) are then actuated to grip the stack (2) from the designated stacking area (26). Specifically, the holding arrangement (62) moves in a downward direction by distance X2 to reach the designated stacking area (26). Upon reaching the designated stacking area (26), the first holding element (621) and the second holding element (622) move toward each other configuring the distance Y2 therebetween to grip the stack (2). The distance Y2 is less than the distance Y1 and sufficient to compress the stack (2) in a longitudinal direction without damaging the folded items of the stack (2) (shown in figures 5a, and 5b). Upon gripping the stack, the control unit (68) communicates with the control module (80) to release the stack (2) by actuating the linear stopper (50) and the transverse stopper (55).

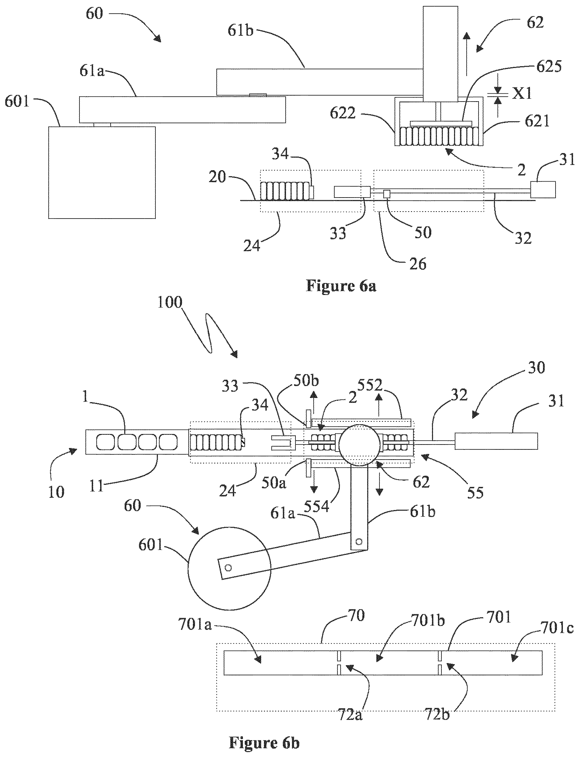

Further, the control unit (68) receives a communication signal from the control module (80) to operate the holding arrangement (62) to pick the stack (2) and move in the upward direction. The holding arrangement (62) is moved in the upward direction until the distance X1 is achieved by the holding arrangement (62) (as shown in figure 6a, and 6b). Simultaneously, the support structure (33) is released by the controller and moves towards the first designated stacking area (24) to support the next stack (2).

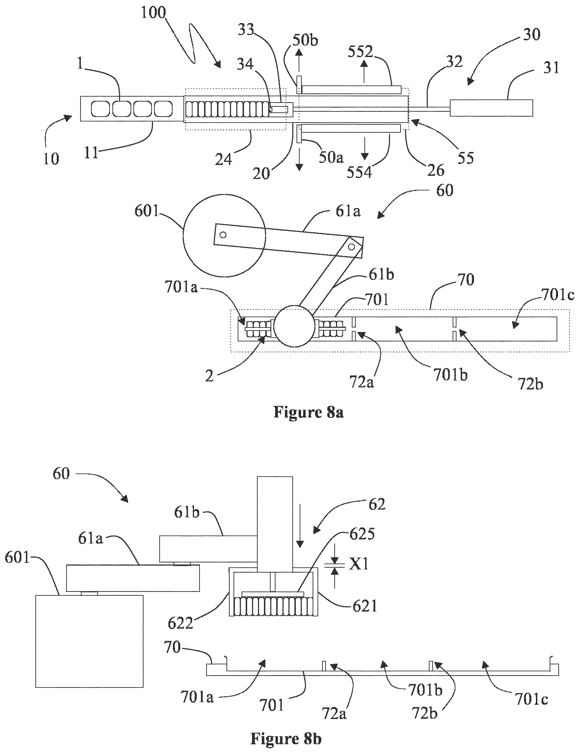

Furthermore, the control unit (68) controls the movement of the plurality of articulated segments (61a, 61b, ...) to position the holding arrangement (62) over the receptacle (701) of the delivery area (70) (as shown in figures 8a, and 8b). The plurality of articulated segments (61a, 61b, ...) are adapted to move the holding arrangement (62) in three directions that are X-direction, Y direction, and the Z direction. The holding arrangement (62) is specifically positioned over the first portion (701a) of the receptacle (701).

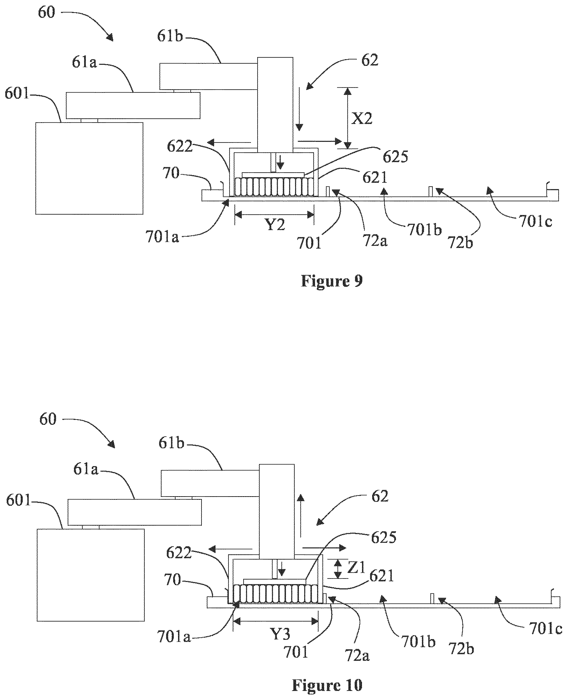

The holding arrangement (62) is moved in the downward direction by distance X2 to release the stack (2) in the receptacle (701) (as shown in figure 9). The first holding element (621) and the second holding element (622) are moved away from each other to release the stack (2) in the receptacle (701). Specifically, the first holding element (621) and the second holding element (622) are moved by a distance of Y3 to release the stack (2) in the first portion (701a) of the receptacle (701) (as shown in figure 10). The pusher (625) is in contact with the stack (2) and extended in a downward direction by a distance of Z1.

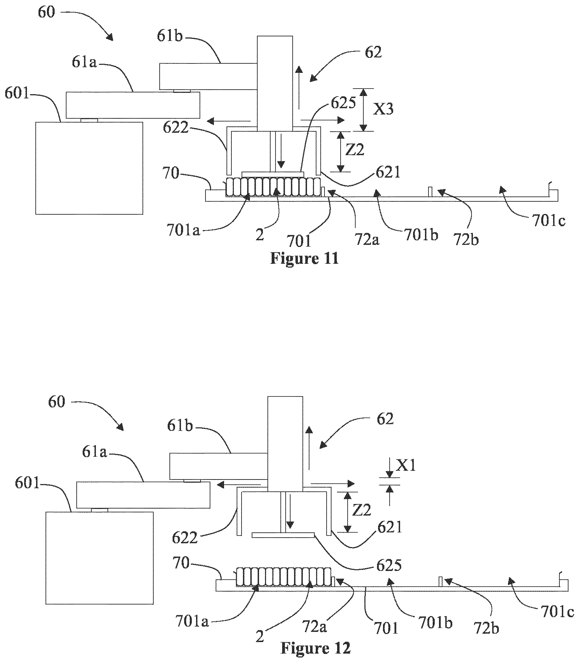

Further, the pusher (625) is actuated to push the stack (2) into the receptacle (701). Specifically, the holding arrangement (62) is moved in an upward direction configuring a distance X3 in between the segment (61b) and the holding arrangement (62), however, the pusher (625) stays on the top of the stack (2) to avoid the movement of folded items along the first holding element (621) and the second holding element (622) while moving in the upward direction (as shown in figure 11). The pusher (625) extends downward until the first holding element (621) and the second holding element (622) completely disengage from the stack (2). The pusher (625) is extended until the distance Z2 is achieved.

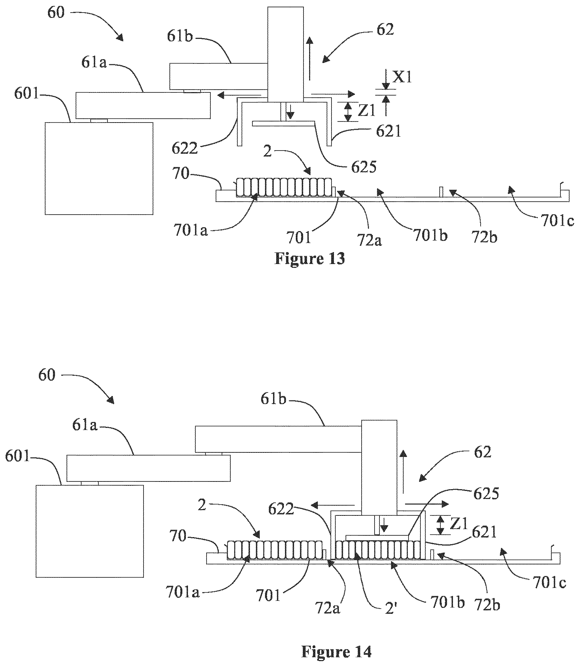

Once, the first holding element (621) and the second holding element (622) are disengaged from the stack (2), the pusher (625) moves in the upward direction along with them configuring the distance X1 (as shown in figure 12). Further, the pusher (625) is moved in the upward direction with respect to the holding arrangement (62) to configure the distance Z1 (as shown in figure 13). Furthermore, the handling apparatus (60) is actuated to position the handling apparatus (60) over the designated stacking area (26) (as shown in figure 4a, and 4b) to pick the next stack. Furthermore, in the next cycle, the handling apparatus (60) releases the stack (2) in the second portion (701b) of the receptacle (701) (as shown in figure 14). The handling apparatus (60) is adapted to fill the plurality of portions (701a, 701b, 701c,...) of the receptacle (701) until the receptacle (701) is filled with the folded items.

In another embodiment, the handling apparatus (60) is adapted to hold the stack (2) temporarily within the holding arrangement (62) while the already filled receptacles (701) are being replaced with blank receptacles (701).

In one more embodiment (not shown), the handling apparatus (60) is adapted to release the stack (2) of folded items into a plurality of receptacles (701) arranged in the delivery area (70). The delivery area (70) is adapted to arrange the plurality of receptacles (701) to receive the stack (2) from the handling apparatus (60). Specifically, the handling apparatus (600 is adapted to simultaneously release the stack (2) in a plurality of portions (701a, 701b, 701c,...) of the plurality of receptacles (701).

Referring to figure 11, the machinery (100) is utilised to perform a method (200) to handle the stack (2). The method (200) to handle the stack (2) is described in conjunction with the machinery (100). The method (200) includes the following steps:
The method (200) starts at step (210).

At step (220), the plurality of folded items are received in the first stacking area (24) using the feeding mechanism (10). The feeding mechanism (10) sequentially introduces the plurality of folded items in the first stacking area (24). The first stacking area (24) is adapted to stack (2) the predefined number of folded items. Further, the machinery (100) has a stopper arrangement to support the incoming folded items in the upright position in the first stacking area (24).

At step (230), upon reaching the predefined number of folded items, the slider arrangement (40) and the support mechanism (30) move in the transport direction to transport the stack (2) from the first stacking area (24) to the designated stacking area (26). The stack (2) is conveyed towards the designated stacking area (26) to hold the stack (2) before delivering it to the delivery area (70).

At step (240), the stack (2) received in the designated stacking area (26) from the first stacking area (24) is held before transporting it to the delivery area (70). The designated stacking area (26) is equipped with the linear stopper (50) and the transverse stopper (55) to hold the stack (2) therein. The linear stopper (50) supports the stack (2) in the linear direction and the transverse stopper (55) supports the stack (2) in the transverse direction to firmly hold the stack (2) in the upright position. Simultaneously, the slider arrangement (40) and the support mechanism (30) are retrieved back to the original position in the first designated stacking area (26).

At step (250), the handling apparatus (60) is actuated by the control unit (68) to position the holding arrangement (62) over the designated stacking area (26). Specifically, the control unit (68) actuates the plurality of articulated segments (61a, 61b, ...) for positioning the holding arrangement (62) over the stack (2) that is held in the designated stacking area (26). Further, the holding arrangement (62) moves toward the stack (2) for gripping the stack (2) using the first holding element (621) and the second holding element (622). Upon reaching the stack, the first holding element (621) and the second holding element (622) move towards each other to grip the stack (2) therebetween. The first holding element (621) and the second holding element (622) move towards each other until the gap between them is sufficient to firmly hold the stack (2) therebetween without letting them fall. The gap between the first holding element (621) and the second holding element (622) is predefined by the control unit (68) based on the number of folding items used to form the stack.

At step (260), upon gripping the stack (2) between the first holding element (621) and the second holding element (622), the holding arrangement (62) is moved in the upward direction to pick up the stack (2) from the designated stacking area (26).

At step (270), after picking up the stack (2), the plurality of articulated segments (61a, 61b, ...) are moved to transport the stack (2) to the delivery area (70). The holding arrangement (62) holds the stack (2) while the plurality of articulated segments (61a, 61b, ...) moves in such a way that the holding arrangement (62) is positioned over the receptacle (701) in the delivery area (70).

At step (280), upon reaching over the receptacle (701), the holding arrangement (62) is moved near the receptacle (701) to release the stack (2) into the receptacle (701). The first holding element (621) and the second holding element (622) are moved away from each other to release the stack (2) into the receptacle (701).

At step (290), after releasing the stack, the stack (2) is pushed by the pusher (625) from the top side to hold the stack (2) into the receptacle (701). While pushing the stack, the control unit (68) actuates the first holding element (621) and the second holding element (622) to move them in the upward direction The pusher (625) is in contact with the stack (2) until the first holding element (621) and the second holding element (622) completely disengages from the stack (2).

The method (200) ends at step (300).

The foregoing descriptions of specific embodiments of the present invention have been presented for purposes of illustration and description. They are not intended to be exhaustive or to limit the present invention to the precise forms disclosed, and obviously, many modifications and variations are possible in light of the above teaching. The embodiments were chosen and described in order to explain the principles of the present invention best and its practical application, to thereby enabling others skilled in the art to best utilise the present invention and various embodiments with various modifications as are suited to the particular use contemplated. It is understood that various omission and substitutions of equivalents are contemplated as circumstance may suggest or render expedient, but such are intended to cover the application or implementation without departing from the scope of the claims of the present invention.

## Claims

1. A machinery (100) to handle a stack (2) of folded items, the machinery (100) comprising:
a transport platform (20) having a first stacking area (24) to receive a plurality of folded items to form a stack (2) of folded items having a predefined number of folded items, and a second stacking area (26) arranged adjacent to the first stacking area (24) to receive the stack (2) of folded items from the first stacking area (24); a delivery area (70) located adjacent to the transport platform (20);
a handling apparatus (60) arranged in between the transport platform (20) and the delivery area (70); the handling apparatus (60) includes:
a base (601),
a plurality of articulated segments (61a, 61b, ...) arranged on the base (601) and connected by joints to allow multi-directional movement,
a control unit (68) configured to manage the movement and operation of the handling apparatus (60),
wherein, at least one articulated segment of the plurality of the articulated segments has a holding arrangement (62) arranged thereon, the holding arrangement (62) is capable of gripping and releasing the stack (2) of folded items from the designated stacking area (26) to the delivery area (70);
wherein the handling apparatus (60) is adapted to pick up at least one stack (2) of folded items from the designated stacking area (26), transport the stack (2) of folded items to the delivery area (70), and release the stack (2) of folded items into a receptacle (701) in the delivery area (70).

2. The machinery (100) as claimed in claim 1, wherein the transport platform (20) includes a support mechanism (30) adapted to support the folded items while receiving a plurality of folded items (1) in the first stacking area (24), wherein upon forming the stack (2) of folded items, the support mechanism (30) moves in the transport direction along with a slider arrangement (40) to transport the stack (2) of folded items in the designated stacking area (26).

3. The machinery (100) as claimed in claim 2, wherein the slider arrangement (40) is arranged at the transport platform (20) and is provided to transport the stack (2) of folded items to the designated stacking area (26) upon receiving the predefined number of folded items in the first stacking area (24).

4. The machinery (100) as claimed in claim 1, wherein the designated stacking area (26) includes a linear stopper (50) and a transverse stopper (55) to hold the stack (2) of folded items in an upright position in the designated stacking area (26) until the holding arrangement (62) grips the stack (2).

5. The machinery (100) as claimed in claim 1, wherein the machinery (100) includes a control module (80) adapted to control a slider arrangement (40), a support mechanism (30), a linear stopper (50), and a transverse stopper (55) and is interfaced with the control unit (68) of the handling apparatus (60) to control the movement of the handling apparatus (60) synchronously.

6. The machinery (100) as claimed in claim 5, wherein the control unit (68) of the handling apparatus (60) communicates with the control module (80) to actuate the linear stopper (50) and the transverse stopper (55) to release the stack (2) once the holding arrangement (62) grips the stack (2) from the designated stacking area (26).

7. The machinery (100) as claimed in claim 1, wherein the holding arrangement (62) includes a first holding element (621) and a second holding element (622), the first holding element (621) and the second holding element (622) are movable in a longitudinal direction facilitating the variable gap between the first holding element (621) and the second holding element (622).

8. The machinery (100) as claimed in claim 7, wherein the first holding element (621) and the second holding element (622) are movable towards each other for gripping the stack (2) of folded items in the designated stacking area (26).

9. The machinery (100) as claimed in claim 7, wherein the holding arrangement (62) includes a pusher (625) movably arranged between the first holding element (621) and the second holding element (622), wherein the pusher (625) is adapted to push the stack (2) of folded items into a receptacle (701) in the delivery area (70).

10. The machinery (100) as claimed in claim 7, wherein the pusher (625) is arranged in such a way that the pusher (625) makes contact with the top side of the stack (2) of folded items, wherein, the pusher (625) is adapted to push the stack (2) of folded items from the top side to release the stack (2) into the receptacle (701) after the stack (2) of folded items being released by the first holding element (621) and the second holding element (622).

11. The machinery (100) as claimed in claim 1, wherein the holding arrangement (62) is adapted to grip the stack (2) of folded items from the designated stacking area (26) and release the stack (2) of folded items into the receptacle (701) in the delivery area (70).

12. The machinery (100) as claimed in claim 9, wherein the pusher (625) is adapted to push the stack (2) of folded items after being released by the first holding element (621) and the second holding element (622), wherein upon releasing the stack (2) of folded items, the first holding element (621) and the second holding element (622) are moved in an upward direction while the pusher (625) is still in contact with the stack (2) of folded items until the first holding element (621) and the second holding element (622) completely disengages from the stack (2) of folded items.

13. The machinery (100) as claimed in claim 1, wherein the handling apparatus (60) is adapted to release the stack (2) of folded items into a plurality of receptacles (701) in the delivery area (70),

14. The machinery (100) as claimed in claim 13, wherein the handling apparatus (60) is adapted to simultaneously release the stack (2) in a plurality of portions (701a, 701b, 701c,...) of the plurality of receptacles (701).

15. A method (200) for handling a stack (2) of folded items, the method (200) comprising,
receiving a plurality of folded items in a first stacking area (24) to form a stack (2) of a predefined number of folded items;
conveying the stack (2) of folded items from the first stacking area (24) to the designated stacking area (26);
holding the stack (2) of folded items in the designated stacking area (26), the designated stacking area (26) includes a linear stopper (50) and a transverse stopper (55) to hold the stack (2) of folded items in an upright position;
gripping the stack (2) of folded items in the designated stacking area (26) using a holding arrangement (62) of a handling apparatus (60), the holding arrangement (62) is having a first holding element (621) and a second holding element (622) movable in a longitudinal direction, the first holding element (621) and the second holding element (622) are being moved towards each other to grip the stack (2) of folded items therebetween;
picking up the stack (2) of folded items from the designated stacking area (26) using the handling apparatus (60);
moving at least one articulated segment of the handling apparatus (60) to transport the stack (2) of folded items in the delivery area (70), the handling apparatus (60) is adapted to move in multiple directions;
releasing the stack (2) of folded items into a receptacle (701) in the delivery area (70), upon reaching the delivery area (70), the first holding element (621) and the second holding element (622) are moved away from each other in the longitudinal direction to release the stack (2) of folded items,
pushing the stack (2) of folded items into the receptacle (701) after releasing the stack, the pusher is in contact with the stack of folded items until the first holding element (621) and the second holding element (622) completely disengages from stack of folded items.
